# EUROPEAN PATENT APPLICATION

(11) **EP 0 559 047 A1**
(43) Date of publication of application: **08.09.1993**
(21) Application number: 93102782.5
(22) Date of filing: 23.02.1993
(51) Int. Cl.: H04M 1/66

(54) **Future blocking of incoming telephone calls**

(30) Priority: 02.03.1992 US 844268
(71) Applicant: Siemens Rolm Communications Inc. (a Delaware corp.), Santa Clara, CA 95052 (US)
(72) Inventor: Iglehart, David, Austin, TX 78704 (US); Ford, Gordon, Round Rock, TX 78681 (US)
(74) Representative: Fuchs, Franz-Josef, Dr.-Ing.

(57) **Abstract**

Method and apparatus for screening telephone calls for use in conjunction with a telephone set as, opposed to a switch, which provides a capability of storing a telephone number for use in blocking calls from the telephone number, without the need for re-entering the telephone number.

## Description

### Technical Field of the Invention

The present invention pertains to method and apparatus for screening telephone calls for use in conjunction with a telephone set, as opposed to a switch, which provides a capability of storing a telephone number for use in blocking calls from the telephone number, without the need for re-entering the telephone number.

### Background of the Invention

Several methods exist in the prior art for providing screening of incoming telephone calls. In a first prior method, a called party utilizes a display telephone to visually identify a caller's telephone number and then chooses whether or not to answer. In a second prior art method, a secretary manually screens calls and chooses whether or not to transfer the caller to the called party. In a third prior art method, the called party blocks all incoming calls by placing his/her telephone off hook or by activating a Do Not Disturb feature. In a fourth prior art method, the called party can screen incoming calls utilizing an audio-monitoring capability which is associated with most answering machines. In a fifth prior art method, the called party can order a service from a telephone company that enables him/her to key in an access code after receiving an incoming telephone call to cause the telephone company to block future calls from the telephone number. In a sixth prior art method, the called party may enter a telephone number into a data base of telephone numbers to be blocked by centralized switching equipment.

In general, the above-described prior methods suffer from several disadvantages. Namely, they: (a) do not provide immediate control to the called party; (b) do not permit him/her to identify the telephone number of the incoming call; (c) do not automate the process of identifying and listing telephone phone numbers to be blocked; and (d) can only be used to block calls from telephone numbers that are known in advance.

In particular, the first prior method has the disadvantages that: (a) not all telephones have displays; (b) the called party may not know the telephone numbers of callers he/she wishes to block; and (c) the called party has to utilize a more complicated, manual method to identify and list the telephone number he/she wishes to block.

In particular, the second prior art method has the disadvantages that it is complicated and does not provide called party control. Specifically, the called party has to rely on a secretary who knows in advance which callers should be blocked. If a called party determines during a call that he/she does not wish to receive further calls from the caller, he/she would have to communicate with the secretary to block future calls from that caller.

In particular, the third prior art method has the disadvantages that it is impractical and unspecific. The called party can block all calls or no calls, with no ability to identify and list telephone numbers.

In particular, the fourth prior art method has the disadvantages that it requires the called party has to listen to part of an incoming call to determine if he/she wants to receive it. Moreover, it requires him/her to be rude to callers he/she does not want to receive, making them talk into his/her answering machine before he/she answers. Also, some callers that he/she does not want to speak to may simply hang up rather than leave a message.

In particular, the fifth prior art method has the disadvantages that it relies on a capability of a central switching unit and that the user would have to pay a monthly service fee for blocking.

In particular, the sixth prior art method has the disadvantages that the called party would have to know in advance the telephone numbers he/she wishes to block and the called party lacks an automatic way to identify and list, during a call, the caller's telephone number, so that it can be blocked in the future. Furthermore, such a method relies on a central switching data base to store the list of numbers to be blocked, to which not all users have access.

As a result, there is a need in the art for a method and apparatus for screening telephone calls for use in conjunction with a telephone set, as opposed to a switch, which provides a capability of storing a telephone number for use in blocking calls from the telephone number, without the need for re-entering the telephone number.

### Summary of the Invention

Embodiments of the present invention advantageously satisfy the above-described need in the prior art by providing method and apparatus for screening telephone calls for use in conjunction with a telephone set, as opposed to a switch, which provides a capability of storing a telephone number for use in blocking calls from the telephone number, without the need for re-entering the telephone number.

In particular, embodiments of the present invention provide method and apparatus which enable a called party to specify, preferably with a single key stroke, during a call, that further calls from the caller's telephone number be blocked, i.e., will not ring the called party's telephone. It is important to note that method and apparatus is provided by the capabilities of the telephone and not by those of a central switching unit. Further, the inventive apparatus can either be contained in the telephone or be arranged separate from the telephone. As those of ordinary skill in the art will readily appreciate, in utilizing embodiments of the present invention, the called party does not have to rely on support by others, does not have to have a display, can have the caller's telephone number identified and listed immediately, can store a large number of extensions for blocking, and does not have to have central switching support or pay a monthly fee for a blocking service.

Specifically, an embodiment of the present invention comprises: (a) means for determining the telephone number of an incoming call; (b) indication means for receiving an indication that future calls from the telephone number of the incoming call are to be blocked; (c) means, responsive to the indication means, for storing the telephone number in a data base; and (d) means, responsive to the incoming call, for determining whether the telephone number is stored in the data base and, if so, blocking the incoming call.

As an example of the advantageous use of the present invention, consider the following scenario. John, a hard-working businessman, sits down with his wife and family for dinner. As on most nights, the telephone starts ringing promptly at six from sales calls, and John finds himself listening to a computer trying to sell him smoked cheese. A smile crosses John's face as he presses an "Auto-block" key on his telephone and hangs up, secure in the knowledge that he will never be bothered by calls from that telephone number again.

The invention will be better understood from the following more detailed description taken with the accompanying drawings and claims.

### Brief Description of the Drawings

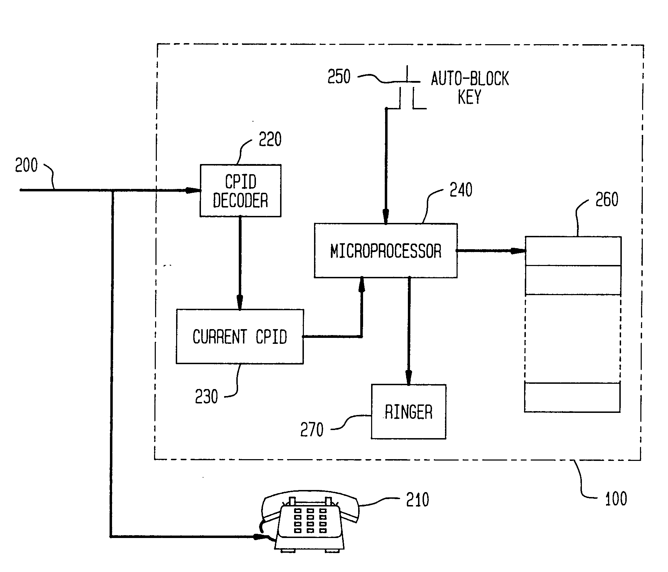

FIG. 1 shows a block diagram of an embodiment of the present invention for use in blocking incoming telephone calls.

Corresponding elements in each of the drawings have the same reference numbers.

### Detailed Description

FIG. 1 shows a block diagram of apparatus 100 which is an embodiment the present invention for use in blocking incoming telephone calls. As shown in FIG. 1, telephone line 200 supplies input to apparatus 100 and to telephone 210. In the embodiment shown in FIG. 1, the ringer in telephone 210 is turned off.

Telephone line 200 provides calling party identification (CPID), commonly referred to as Automatic Number Identification (ANI), which is available with telephone services such as Integrated Services Digital Network (ISDN) or Customized Local Area Signalling Services (CLASS), all of which is well known to those of ordinary skill in the art.

As shown in FIG. 1, output from telephone line 200 is applied as input to CPID decoder 220. CPID decoder 220 is apparatus which is well known to those of ordinary skill in the art for decoding the telephone number of incoming a call on telephone line 200 into a static digital format which can be utilized by other elements in apparatus 100. Output from CPID decoder 220 is applied as input to current CPID 230. Current CPID 230 is memory storage means which is well known to those of ordinary skill in the art such as solid state random access memory which stores information produced by CPID decoder.

Output from current CPID 230 is applied as input to microprocessor 240. Microprocessor 240 is any appropriate general purpose microprocessor of a type which is well known to those of ordinary skill in the art which is capable of monitoring a number of stimuli and making decisions on the basis of those stimuli to provide predetermined responses.

Auto-block key 250 is means of providing stimuli which is well known to those of ordinary skill in the art to microprocessor 240 for use in indicating that a called party has decided to block future calls from the telephone number contained in current CPID 230. Thus, whenever the called party depresses auto-block key 250, microprocessor 240 retrieves the telephone number stored in current CPID 230 and transfers it to data base 260.

Data base 260 is means of memory storage which is well known to those of ordinary skill in the art such as, for example, random access memory, for retaining a list of telephone numbers to be blocked. Finally, ringer 270 is a device which is well known to those of ordinary skill in the art for alerting a called party that an incoming call is being received. As will be explained below, ringer 270 will not be activated for blocked calls.

The following describes the operation of apparatus 100 shown in FIG. 1. When an incoming call is being received by apparatus 100, CPID decoder decodes the CPID and stores it in current CPID 230. Microprocessor 240 retrieves the CPID stored in current CPID 230 and compares it with the telephone numbers stored in data base 260. The comparison of the CPID of the incoming calls with the telephone numbers in the data base may be performed in any one a multiplicity of methods which are well known to those of ordinary skill in the art. If there is a match, i.e., the incoming call is to be blocked, ringer 270 is not activated and the called party does not answer the call and, advantageously, is not even made aware of its existence. However, if there is a match, microprocessor 240 causes ringer 270 to be activated to alert the called party of the incoming call.

Later, at any time during the call, or at any time while the telephone number is stored in current CPID 230, if the called party desires to block future calls from the telephone number he/she depresses auto-block key 250. In response, by generation of a signal or by polling, microprocessor 240 retrieves the telephone number from current CPID 230 and stores it in data base 260.

As those of ordinary skill in the art readily appreciate, embodiments of the present invention may either be contained in telephone 210 or may be separate from telephone 210. Further, if apparatus 100 or telephone set 210 has a display, the number to be blocked may be displayed thereby. Still further, apparatus 100 may further comprise a keypad for use in interacting with microprocessor 240 or the keypad of telephone 210 may be used to interact with microprocessor 240 for use in deleting telephone numbers from the data base. Lastly, although embodiments of the present invention have been described which utilize an auto-block key, it should be understood that this is not a limitation on the scope of the present invention. Specifically, in an embodiment which utilizes a keypad or the keypad of telephone 210, the notification of the desire to block future calls from a telephone number may be indicated by a predetermined one or more keypad presses.

It is to be appreciated and understood that the specific embodiments of the invention described hereinbefore are merely illustrative of the general principles of the invention. Various modifications may be made by those skilled in the art consistent with the principles set forth hereinbefore.

## Claims

1. Apparatus for use in conjunction with a telephone set for blocking future incoming telephone calls which comprises:
means for determining the telephone number of an incoming call;
indication means for receiving an indication that future calls from the telephone number of the incoming call are to be blocked;
means, responsive to the indication means, for storing the telephone number in a data base; and
means, responsive to the incoming call, for determining whether the telephone number is stored in the data base and, if so, blocking the incoming call.

2. The apparatus of claim 1 further comprising means for generating the indication.

3. The apparatus of claim 2 wherein said means for generating the indication comprises a key.

4. A telephone set for blocking future incoming telephone calls which comprises:
means for determining the telephone number of an incoming call;
indication means for receiving an indication that future calls from the telephone number of the incoming call are to be blocked;
means, responsive to the indication means, for storing the telephone number in a data base; and
means, responsive to the incoming call, for determining whether the telephone number is stored in the data base and, if so, blocking the incoming call.

5. The telephone set of claim 4 further comprising means for generating the indication.

6. The apparatus of claim 5 wherein said means for generating the indication comprises a key on the telephone set.

7. The telephone set of claim 4 wherein the indication is provided by a predetermined sequence of one or more keys on the telephone set.
